# EUROPÄISCHE PATENTSCHRIFT

(11) **EP 0 749 794 B1**
(45) Veröffentlichungstag und Bekanntmachung des Hinweises auf die Patenterteilung: **14.05.2003**
(21) Anmeldenummer: 96109374.7
(22) Anmeldetag: 12.06.1996
(51) Int. Cl.: B23B 51/04

(54) **Bohrwerkzeug**
Drilling tool
Outil de perçage

(30) Priorität: 23.06.1995 DE 19522837
(43) Veröffentlichungstag der Anmeldung: 27.12.1996
(73) Patentinhaber: August Beck GmbH & Co., D-72474 Winterlingen (DE)
(72) Erfinder: Basteck, Andreas, Dr., 79539 Lörrach (DE)
(74) Vertreter: Kinkelin, Ulrich, Dipl.-Ing.

(56) Entgegenhaltungen:
- EP-A- 0 054 913
- DE-A- 3 545 586
- FR-A- 2 371 263
- US-A- 4 563 113

## Beschreibung

Die Erfindung betrifft ein Bohrwerkzeug für Bohrungen in Metallvollmaterial gemäß dem Oberbegriff des Patentanspruchs 1 und wie aus der EP-A-0 054 913 bekannt ist. Dort wird ein Bohrwerkzeug mit radialem Schnittkraftausgleich beschrieben, dessen Bohrerschaft mit mindestens zwei in gleichem Umfangswinkelabständen versetzten Aufnahmen versehen ist, in den jeweils eine, gleich lange Schneidkanten aufweisende und auswechselbare Wendeschneidplatte in radialer Richtung angeordnet ist. Die Arbeitsbereiche der Wendeschneidplatten überdecken sich zumindest teilweise, wobei die radial innere Wendeschneidplatte mit ihrer einen in Eingriff stehenden Schneidplatte die Bohrerachse geringfügig überschneidet. Eine zwischen denen sich in Eingriff bestehenden Schneidkanten liegende Winkelhalbierende ist gegenüber der Bohrerlängsachse um einen Winkel α geneigt. Durch eine gleichförmige Neigung der Winkelhalbierenden von der radial inneren als auch radial äußeren Wendeschneidplatte und einen mit Rechtsdrall ausgebildeten Grundkörper des Bohrwerkzeuges sollen die auf den Bohrerschaft resultierenden Schneidkräfte sich gegenseitig aufheben, so daß ein vollkommener Kraftausgleich des Bohrerschaftes in radialer Richtung erzielt werden kann.

Aufgrund des vollkommenen Kraftausgleiches des Bohrerschaftes in radialer Richtung kann ein Auslaufen des Bohrerschaftes aus der Bohrachse vermieden werden, jedoch können beim Herausfahren des Bohrers aus dem Bohrloch Rückzugsriefen auftreten.

Zur Verbesserung der obigen Nachteile ist aus der EP-PS 0 532 532 ein Bohrwerkzeug bekannt, bei dem bewußt eine Wendeschneidplattenanordnung gewählt ist, bei der die Summe der aus allen in Eingriff stehenden wirksamen Schneidkanten resultierenden Radialkraftkomponente von Null verschieden ist. Dadurch können Bohrlöcher geschnitten werden, deren Durchmesser geringfügig größer als der Bohrerdurchmesser ist. Das Bohrwerkzeug kann nicht in den Bohrungen klemmen und beim Herausziehen des Bohrerschaftes können die Rückzugsriefen vermieden werden.

Diese Bohrwerkzeuge weisen jedoch den Nachteil auf, daß sie aufgrund ihrer Ausbildung zu erhöhten Schwingungen beim Bohren in Vollmaterial neigen. Dies wird durch sichtbare Rattermarken in dem Grund des Bohrloches deutlich. Derartige Schwingungen führen dazu, daß eine erhöhte Schnittkraft erforderlich ist, um Material abzutragen, wodurch auch die resultierende Kraft ansteigt. Diese steigt desweiteren mit zunehmender Bohrlochtiefe an, wodurch die Arbeitsverhältnisse angepaßt werden müssen, um einen Bruch des Bohrwerkzeuges zu vermeiden. Darüber hinaus ist eine erhöhte Vorschubkraft erforderlich, um das Material abzutragen. Weiterhin ist nachteilig, daß die erhöhte Schwingung zu einer Geräuschbelästigung als auch zur teilweisen Schwingungsanregung der gesamten Bohrmaschine führt.

Der Erfindung liegt die Aufgabe zugrunde, das gattungsgemäße Bohrwerkzeug weiter zu entwickeln, damit zumindest eine schwingungsarme Ausgestaltung eines Bohrwerkzeuges und Erhöhung der Schnittleistung ermöglicht ist.

Diese Aufgabe wird erfindungsgemäß durch ein Bohrwerkzeug mit den kennzeichnenden Merkmalen des Anspruchs 1 gelöst. Im Unterschied zu den nach dem Stand der Technik bekannten eingangs aufgezeigten Bohrwerkzeugen wird auf den Rechtsdrall der Schneidenanordnung an einem Bohrergrundkörper verzichtet. Der Bohrergrundkörper wird mit einem Linksdrall versehen, der zu einer erheblichen Schwingungsberuhigung des Bohrwerkzeuges führt. Aufgrund des Linksdralles wird der Grundkörper des Bohrwerkzeuges auf Zug beansprucht im Gegensatz zu einem mit Rechtsdrall ausgebildeten Grundkörper, auf den während des Schneidvorgangs Druckspannungen ausgeübt werden. Diese Druckspannungen führen zu Rattermarken im Bohrgrund, die wiederum zeigen, daß eine kurzzeitig erhöhte Spannung auftritt, die dann die Vertiefung der Rattermarke bildet und zu der nächsten Vertiefung aufgrund einer zwischenzeitlichen Entlastungsphase weiterspringt. Im Gegensatz hierzu wird bei einer Betrachtung des Eingriffspunkts der Schneide deutlich, daß beim Linksdrall die Schneide entgegen der Schnittkraft gezogen wird und wie bei dem Rechtsdrall nicht gedrückt wird. Dadurch kann kein Kippmoment entstehen und somit kann keine Schwingungserregung hervorgerufen werden.

Durch die Ausbildung eines Linksdralles, der zumindest von Null Grad verschieden ist, wird bewirkt, daß die Hauptträgheitsachse des Bohrers in die im Bereich mit dem größten Schwingungspotential aufweisende Kraftkomponente und der resultierenden Kraft gelegt wird, d.h., daß die Hauptträgheitsachse auf den Bereich der Schneidkante der äußeren Platte ausgerichtet ist. Dadurch wird gleichzeitig der Profilquerschnitt des Grundkörpers in die Richtung des Hauptwiderstandsmomentes gedreht. Dadurch liegt die mit dem größten Schwingungspotential aufweisende Kraftkomponente im wesentlichen in der Hauptträgheitsachse, wodurch ebenfalls eine Schwingungsberuhigung ermöglicht ist.

Durch die erfindungsgemäße Ausgestaltung des Grundkörpers durch einen Linksdrall kann zusätzlich auch eine Erhöhung der Steifigkeit des Bohrwerkzeuges erzielt werden, da eine geringe Schwingungsbelastung auf das Bohrwerkzeug wirkt.

Der Bohrer kann weiterhin einen diskontinuierlichen Linksdrall aufweisen, welcher ein frühzeitigeres Hereindrehen der Hauptträgheitsachse in der Ebene der mit dem größten Schwingungspotential vorweisenden Kraftkomponente ermöglicht, so daß nicht erst im auslaufenden Bereich der Spannuten der Trägerkörper das größte Hauptwiderstandsmoment in der oben beschriebenen Ebene vorliegt. Die Hauptträgheitsachse des Bohrers kann bereits im letzten Drittel ± 20 % diese Ebene erreichen und verbleibt in dieser Position, was einen geradlinigen weiteren Verlauf der Spannuten zur Folge hat.

Eine weitere erfindungsgemäße Ausgestaltung zur Erhöhung der Steifigkeit des Bohrwerkzeuges ist durch einen Kernanstieg des Grundkörpers im hinteren Bereich des Bohrerschaftes gegeben. Der im hinteren Bereich des Bohrerschaftes liegende Querschnitt kann bis zu 10% im Verhältnis zu dem Querschnitt des Schaftes im vorderen Bereich vergrößert werden, wobei die Querschnittsvergrößerung so bemessen ist, daß ein sich nach hinten verjüngende Spanraum nicht zu klein ausgebildet wird, damit die abzuführenden Späne problemlos über den Spanraum abgeführt werden können.

Eine weitere erfindungsgemäße Ausgestaltung des Grundkörpers zur Erhöhung der Steifigkeit ist durch die Ausbildung einer Versteifungswulst an einer Seitenfläche des Spanraumes vorgesehen, die einer eine Wendeschneidplatte aufnehmenden Seitenfläche gegenüberliegend angeordnet ist. Durch die Ausbildung der Versteifungswulst im Außenbereich der Seitenfläche des Spanraumes kann eine Erhöhung des Widerstandsmomentes als auch des Trägheitsmomentes des Bohrergrundkörpers gegeben sein. Die Versteifungswulst erstreckt sich vorteilhafterweise von einer Stimseite einer Freifläche des Bohrers bis zu dessen Auslaufbereich des Spanraumes.

Nach einer weiteren erfindungsgemäßen Ausgestaltung eines Bohrwerkzeuges zur Erhöhung dessen Steifigkeit ist vorgesehen, daß der Querschnitt des Grundkörpers optimiert ist, in der Gestalt, daß ein sehr großer Spanraum ausgebildet ist, wobei gleichzeitig das Widerstands- als auch Trägheitsmoment erhöht ist Der Grundkörper weist im Querschnitt zwei diametral einander gegenüberliegende im wesentlichen viertelkreisförmige Vollquerschnittssegmente auf, die dazwischenliegend die Spanräume bilden. Die Querschnitte überdecken dabei im wesentlichen in einem X-Y-Achsensystem gesehen den ersten und dritten Quadranten. Der zweite und vierte Quadrant bildet dabei den Spanraum. Dabei ist vorteilhafterweise vorgesehen, daß an der einen Seitenfläche des Spanraumes zugleich die Versteifungswulst vorgesehen ist.

Eine weitere vorteilhafte Ausgestaltung der Erfindung zur Schwingungsberuhigung ist durch die Ausgestaltung eines optimierten Spanablaufes gegeben. Dieser ist dadurch gewährleistet, daß im Übergangsbereich einer Hauptfreifläche des Bohrwerkzeugs zu einer Seitenfläche des Spanraumes eine auf ein absolutes Minimum ausgebildete Schrägfläche als Kantenabzug vorgesehen ist, die als eine gegenüber der Seitenfläche des Spanraumes geneigte Fläche ausgebildet ist. Dieser Kantenabzug ist vorteilhafterweise als Fase ausgebildet und erstreckt sich nur wenige Millimeter von einer Stimkante der Hauptfreifläche in die Seitenfläche der Aussparung. Dadurch kann gegenüber einer bisherigen sehr großflächig und lang in Richtung auf den hinteren Bereich sich erstreckenden Kantenabzug eine weitere Schwingungserregung verhindert werden, die dadurch hervorgerufen wurde, daß der Spanraum beim Übergang von dem Kantenabzug in die Seitenfläche der Ausnehmung eine Verengung des gesamten Spanraumes aufweist, wodurch der Span gegen die Bohrungswand gedrückt wird. Dadurch werden zusätzliche Kräfte erzeugt, die wiederum auf den Bohrer zurückwirken und diesen auslenken wollen, wodurch es zu einer Schwingungserregung kommt. Aufgrund des sehr klein ausgebildeten Kantenabzuges wird der abgetragene Span von dem vorderen Bereich des Bohrerschaftes über einen Spanraum mit konstantem Querschnitt nach hinten befördert, so daß keine zusätzlichen Kräfte erzeugt werden und Störungen im vorderen Bereich des Bohrerschaftes auftreten.

Das erfindungsgemäße Bohrwerkzeug kann zur Schwingungsberuhigung und/oder Erhöhung der Steifigkeit sowohl einen Linksdrall, einen Kernanstieg, eine Versteifungsleiste, einen klein ausgebildeten Kantenabzug, als auch eine Grundkörpergeometrie mit zwei im wesentlichen diametral einander gegenüberliegenden viertelkreisförmigen Vollquerschnitten aufweisen, als auch in beliebiger Kombination mit einem oder mehreren zur Schwingungsberuhigung und/oder Erhöhung der Steifigkeit bevorzugten Merkmale ausgebildet sein.

Weitere vorteilhafte Ausführungsformen und Weiterbildungen der Erfindung sind durch die Merkmale der Unteransprüche gegeben und in der Beschreibung näher ausgeführt.

In den Zeichnungen ist ein bevorzugtes Ausführungsbeispiel dargestellt. Es zeigen:
- Fig. 1: Eine schematische Seitenansicht eines erfindungsgemäßen Bohrwerkzeuges mit Linksdrall,
- Fig. 2: eine schematische Seitenansicht eines erfindungsgemäßen Bohrwerkzeuges mit einem Kemanstieg,
- Fig. 3: eine Draufsicht auf das erfindungsgemäße Bohrwerkzeug gemäß Fig. 1,
- Fig. 4: eine schematische Darstellung eines Bohrwerkzeuges mit Rechtsdrall,
- Fig. 5: eine schematische Darstellung des erfindungsgemäßen Bohrwerkzeuges mit Linksdrall,
- Fig. 6: ein erfindungsgemäßes Bohrwerkzeug mit symmetrischer Verdrehung der Schneideinsätze zu einer Bohrerlängsachse und
- Fig. 7: eine perspektivische Ansicht auf einen vorderen Bereich des erfindungsgemäßen Bohrwerkzeuges.

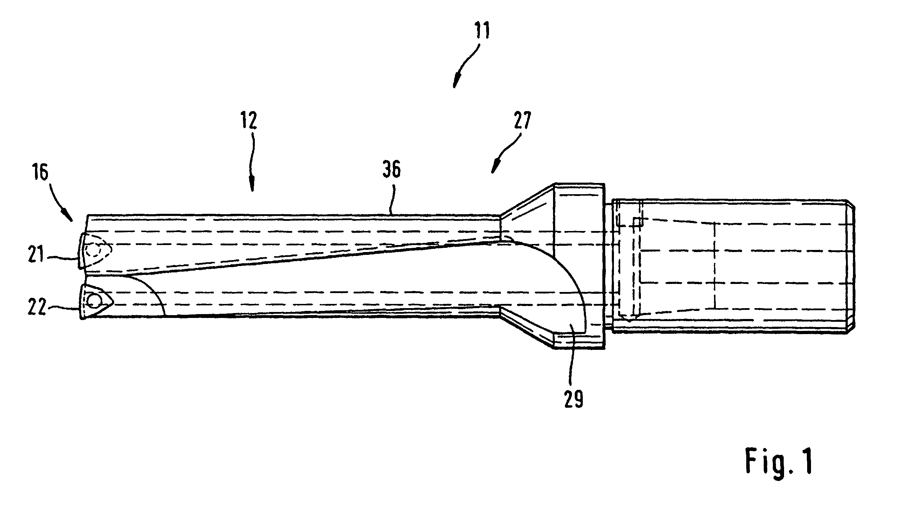

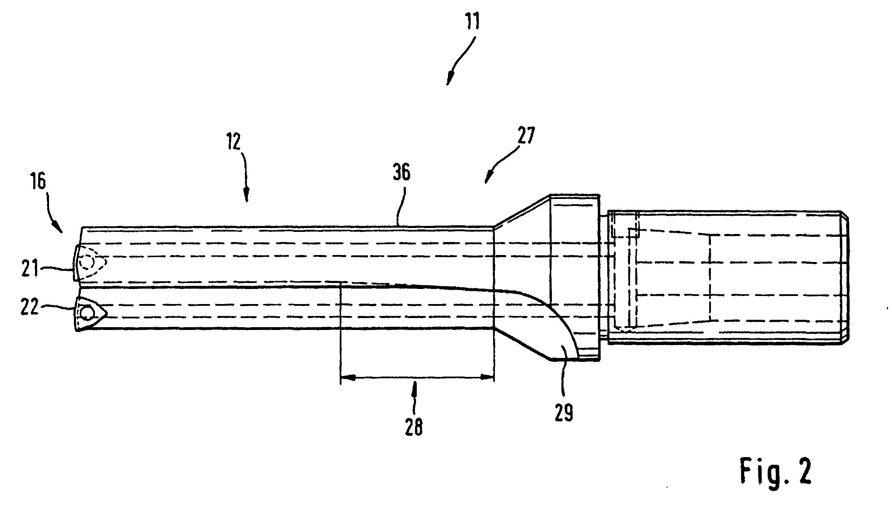

In den Fig. 1, 2 und 4 bis 6 ist ein Bohrwerkzeug 11 entsprechend der Erfindung dargestellt. Es handelt sich bevorzugt um einen 3,5 x D-Bohrer, wobei die erfindungsgemäßen Merkmale ebenso auf andere Kurzlochbohrer oder Bohrwerkzeuge übertragbar sind. Ein Bohrerschaft 12 weist zwei diametral einander gegenüberliegende sich axial erstreckende Ausnehmungen 13, 14 auf, die zur Entfernung der Bohrspäne dienen. Die Ausnehmungen 13, 14 sind im wesentlichen um 180° zueinander versetzt. An einer Stimseite 16 des Bohrwerkzeuges 11 ist jeweils in einer Aufnahme an einer Begrenzungswand 17, 18 jeder Ausnehmung 13, 14 jeweils eine Wendeschneidplatte 21, 22 angeordnet. Diese Wendeschneidplatten 21, 22 sind vorteilhafterweise sechseckig ausgebildet, wobei deren in Eingriff stehenden Schneidkanten 41, 42, 43, 44 einen Winkel zwischen 150° bis 170° einschließen. Jede Wendeschneidplatte 21, 22 ist mit einem Klemmbolzen umsetz- und auswechselbar befestigt. Die Wendeschneidplatten 21, 22 stehen jeweils mit zwei Seitenkanten 41, 42 und 43, 44 in Schneideingriff, wobei die Wendeschneidplatte 21 einen an die Bohrerlängsachse 26 angrenzenden und diesen in geringem Umfang übergreifenden Bereich schneidet und die Wendeschneidplatte 22 den Bereich der Bohrung schneidet, der an den Bohrerumfang heranreicht. Die einzelnen Arbeitsbereiche der Wendeschneidplatten 21, 22 überdecken sich in ihren Arbeitsbereichen.

Die radial innenliegende Wendeschneidplatte 21 ist der Ausnehmung 13 zugeordnet, die im folgenden als Innenspanraum bezeichnet ist. Die radial außenliegende Wendeschneidplatte 22, die an den Außenumfang der Bohrung angrenzt, ist der Ausnehmung 14 zugeordnet, die im folgenden als Außenspanraum bezeichnet ist. Die Wendeschneidplatten 21, 22 sind radial zur Bohrerlängsachse 26 gesehen in einem Winkel von 172° gegeneinander versetzt angeordnet. Diese Winkelanordnung hat den Vorteil, daß der Innenspanraum 13 geöffnet bzw. vergrößert ausgebildet ist, wodurch ein begünstigter Spanablauf auf der inneren Wendeschneidplatte ermöglicht und eine Schwingungsberuhigung gegeben ist. Bei jeder Wendeschneidplatte 21, 22 ist eine Winkelhalbierende 23, 24 in einem Bereich zwischen 0° und 10° gegenüber einer Bohrerlängsachse 26 unter gleichem Winkel geneigt. Die Wendeschneidplattenanordnung 21, 22 ist bewußt so gewählt worden, damit bei der Summe der aus allen in Eingriff stehenden wirksamen Schneidkanten 41, 42, 43, 44 resultierenden Radialkraftkomponenten von Null verschieden ist und im Richtungsbereich der Schneide mit der äußeren Schneidplatte nach außen weist. Dadurch kann erreicht werden, daß der Bohrer 11 während des Bohrvorganges mit einem etwas größeren Durchmesser beim Bohren arbeitet. Hierdurch entsteht der Vorteil, daß die Bohrwerkzeuge 11 nicht in den Bohrungen klemmen können und beim Herausziehen des Bohrerschaftes 12 keine Rückzugsriefen in der Bohrungswand auftreten. Bei einem 3,5 x D-Bohrwerkzeug 11 mit einer radialen Winkelanordnung der Wendeschneidplatten 21, 22 von 172° hat sich eine gemeinsame Verdrehung α der Wendeschneidplatten 21, 22 um 4° gegenüber der Bohrerlängsachse 26 erwiesen.

Das Bohrwerkzeug 11 weist erfindungsgemäß zur Erhöhung der Steifigkeit des Grundkörpers eine Vergrößerung des Querschnitts im hinteren Bereich 27 des Bohrerschaftes 12 auf. Ein derartiger Kemanstieg 28 ist in dem Innen- und Außenspanraum 13, 14 vorgesehen. Der Außendurchmesser des Bohrerschaftes 12 bleibt konstant. Der Profilquerschnitt des Bohrerschaftes 12 kann sich im hinteren Bereich 27 bis zum Spanauslauf 29 um bis zu 10% gegenüber dem vorderen Profilquerschnittsbereich 31 nahe den Wendeschneidplatten 21, 22 erhöhen, wobei bevorzugt ein Bereich von 5% ± 20% vorgesehen ist. Der Kemanstieg 28 kann entweder an der Begrenzungswand 17, 18 oder an einer gegenüberliegenden Seitenfläche 32, 33 des Innen- und Außenspanraumes 13, 14 als auch an der Begrenzungsinnenwand 17, 18 und der Seitenflächen 32, 33 vorgesehen sein. Der Kantenanstieg 28 weist vorteilhafterweise einen kontinuierlichen Anstieg auf, der im mittleren und hinteren Bereich 29 des Bohrerschaftes 12 beginnt. Dabei ist vorteilhafterweise ein fließender Übergang zwischen den Seitenflächen 32, 33 und Begrenzungswänden 17, 18 zu dem Kernanstieg 28 vorgesehen, damit eine gute Abführung des Spanes aus dem Innen- und Außenspanraum 13, 14 erhalten bleibt und die Spanraumverjüngung nicht zur Schwingungserregung führt.

Alternativ kann vorgesehen sein, daß der Kemanstieg 28 im Querschnitt gesehen einen diskontinuierlichen Verlauf aufweist. Trotz des relativ geringen Anstieges bzw. der Querschnittsvergrößerung kann eine wesentliche Erhöhung der Steifigkeit im unteren Bereich 27 des Bohrerschaftes 12 durch die Erhöhung des Widerstandsmomentes als auch des Trägheitsmomentes im Querschnitt geschaffen werden.

Zur weiteren Erhöhung der Steifigkeit des Bohrwerkzeugs 11 ist die erfindungsgemäße Ausgestaltung des Querschnittprofils des Bohrerschaftes 12. Die Seitenfläche 32 und Begrenzungswand 17 des Innenspanraumes 13 sind im wesentlichen rechtwinklig zueinander angeordnet. Ebenso sind die Begrenzungswand 18 und Seitenfläche 33 des Außenspanraumes 14 im wesentlichen rechtwinklig zueinander angeordnet. Die beiden Spanräume 13, 14 sind diametral einander gegenüberliegend angeordnet. Der Innenals auch Außenspanraum 13, 14 weisen aufgrund des erfindungsgemäßen Linksdralles, der nachfolgend ausgeführt wird, über den Verlauf des Bohrerschaftes 12 eine Verdrehung γ im Bereich zwischen 15° und 40° auf, wobei vorzugsweise 29° bei einem Linksdrall von in etwa 3° vorgesehen ist. Über den gesamten Bereich des Bohrerschaftes 12 kann somit ein großer Spanraum geschaffen werden, der eine gute Spanabfuhr ermöglicht.

Zur weiteren Erhöhung der Steifigkeit des Profilquerschnittes des Bohrerschaftes 12 ist erfindungsgemäß vorgesehen, daß an den Seitenflächen 32, 33 des Innen- und Außenspanraumes 13, 14 eine Versteifungswulst 34 ausgebildet ist. Diese im äußeren Randbereich der Seitenflächen 32, 33 angeordnete Versteifungswulst 34, die sich bevorzugt über die gesamte Länge des Bohrerschaftes 12 erstreckt, ermöglicht eine Erhöhung des Widerstandsmoments als auch des Trägheitsmoments. Dadurch ist zusätzlich die Ausbildung des großen Innen- und Außenspanraumes 13, 14 ermöglicht. Die Versteifungswulst 34 ist streifenförmig ausgebildet und weist eine geringfügige Erhöhung gegenüber der Seitenfläche 32, 33 auf. Im Übergangsbereich von der Seitenfläche 32, 33 zu der äußeren Versteifungswulst 34 ist ein fließender Übergang geschaffen. Der äußere Randbereich der Versteifungswulst 34 schließt sich unmittelbar an eine Mantelfläche 36 des Bohrerschaftes 22 an. Die Erhöhung der Versteifungswulst 34 gegenüber der Seitenfläche 32, 33 kann im Bereich von wenigen Millimetern liegen. Die Breite der Versteifungswulst 34 ist gegenüber der Seitenfläche 32, 33 klein ausgebildet, so daß der Spanraum 13, 14 in seiner Größe im wesentlichen erhalten bleibt

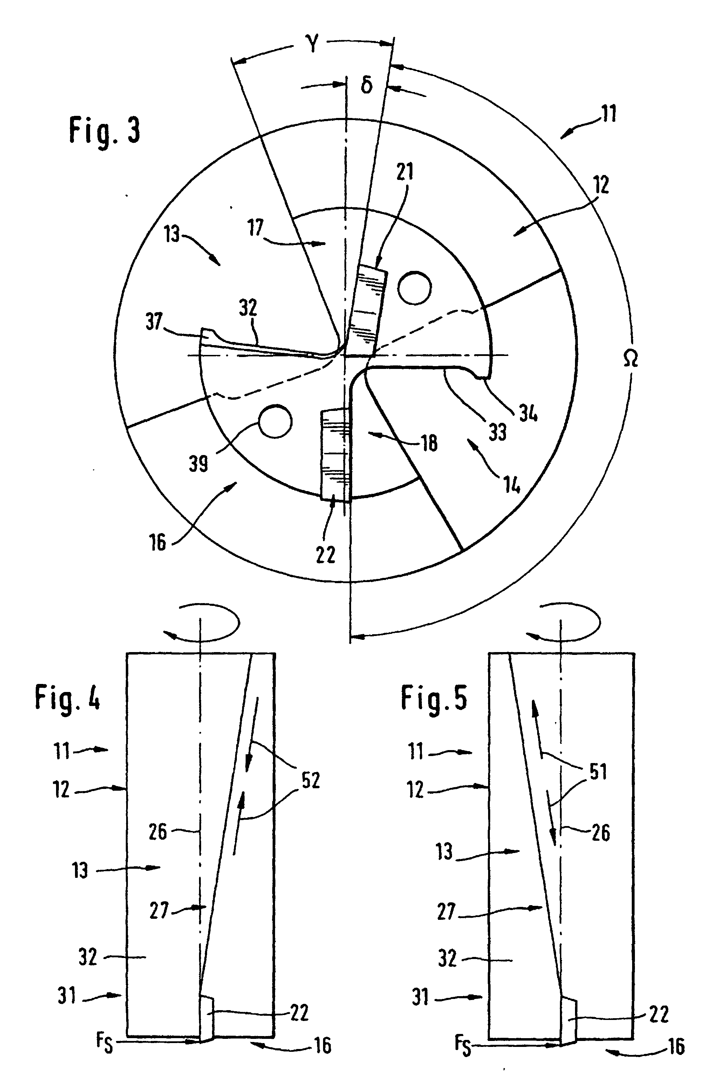

Das Bohrwerkzeug 11 weist erfindungsgemäß einen Linksdrall auf. Dieser Linksdrall kann in einem Winkel 8 zwischen 0,1° und 20° liegen, wobei vorzugsweise ein Linksdrall mit einem Winkel δ von 2° bis 4° vorgesehen ist. Gegenüber dem bisher üblichen Rechtsdrall derartiger aus dem Stand der Technik bekannter Bohrwerkzeuge weist das nunmehr mit einem Linksdrall ausgebildete Bohrwerkzeug 11 den Vorteil auf, daß in dem Bohrschaft 12 während der in Eingriff stehenden Wendeschneidplatten 21, 22 Zugspannungen gemäß Pfeilrichtung 51 auftreten. Dadurch kann eine wesentliche Schwingungsberuhigung des Bohrwerkzeuges 21 geschaffen werden. Dies wird insbesondere dann deutlich, wenn man den Eingriffspunkt der Wendeschneidplatten 21, 22 als Einspannstelle oder Lagerpunkt, wie bereits aus der Mechanik bekannt ist, betrachtet und in Fig. 3 und Fig. 4 im Vergleich dargestellt ist Die Wendeschneidplatten 21, 22 werden beim Bohrwerkzeug 11 mit Linksdrall über die Einspannstelle oder Lagerpunkt gezogen und nicht wie bei dem bisher bekannten Bohrwerkzeug mit Rechtsdrall gegen die Einspannstelle oder Lagerpunkt gedrückt wird und zu Druckspannungen gemäß Pfeilrichtung 52 führt. Dadurch ist einsichtig, daß aufgrund des Linksdralles ein schwingungsberuhigender Schneidvorgang stattfindet. Dies wird insbesondere bei der Betrachtung des Grundes eines Bohrloches deutlich, bei dem keine Rattermarken im Gegensatz zu einem Bohrer mit Rechtsdrall auftreten. Gleichzeitig kann durch die Anordnung des Linksdralles der Bohrungsschaft eine höhere Oberflächenqualität aufweisen, da bei einem schwingungsberuhigten Schneidvorgang keine radialen undefinierten Kräfte auf den Bohrerschaft wirken und diesen unregelmäßig auslenken, sondern lediglich eine Schneidkraft im Bohrgrund auftritt, die eine kontinuierliche Bewegungsrichtung des Bohrwerkzeuges 11 in Bohrerlängsachse 26 ermöglicht.

Aufgrund des geringen Anstiegs des Linksdralles bleibt die Förderwirkung des Innenund Außenspanraumes 13, 14 erhalten, so daß nach wie vor ein optimaler Spanablauf gegeben ist. Das erfindungsgemäße Bohrwerkzeug 11 weist somit zur Schwingungsberuhigung als auch zur Erhöhung der Schnittkraft und Schnittleistung sowohl einen Linksdrall, einen Kernanstieg 28, einen vergrößerten Innen- und Außenspanraum 13, 14 und somit ein optimiertes Querschnittsprofil des Bohrerschaftes 22 als auch eine Versteifungswulst 34 auf. Alternativ kann auch vorgesehen sein, daß eines der vorherigen genannten Merkmale für sich alleine oder in beliebiger Kombination mit einem oder weiteren Merkmalen zur Verbesserung der Steifigkeit als auch zur Schwingungsberuhigung eingesetzt werden kann.

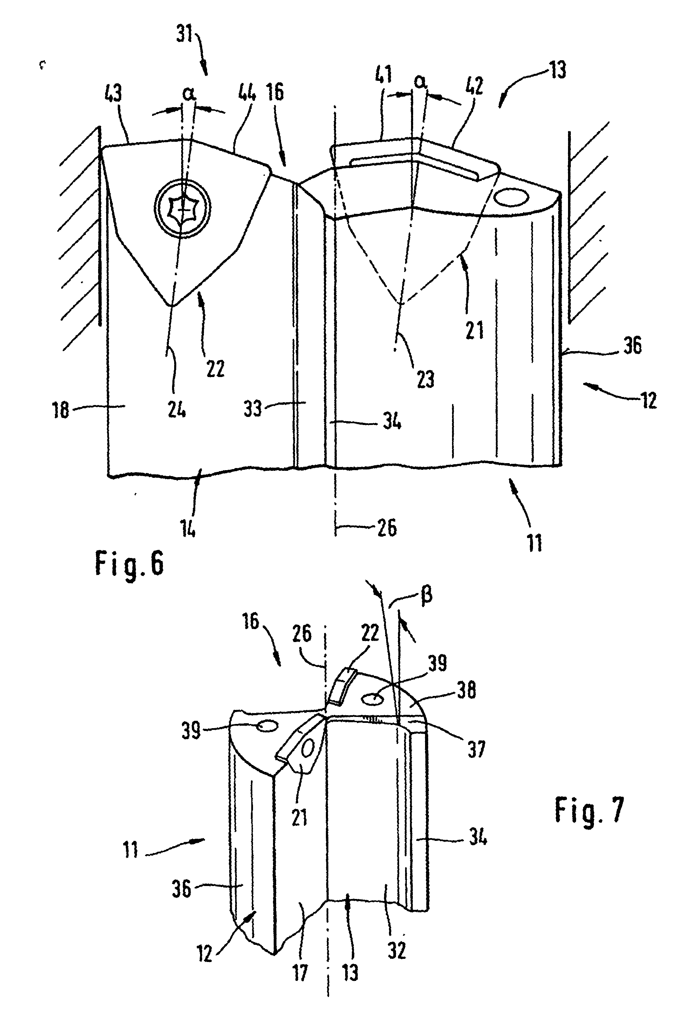

Zur Optimierung des Spanablaufes ist desweiteren erfindungsgemäß vorgesehen, daß ein Kantenabzug 37, der an der Seitenfläche 32 angeordnet ist, sehr klein ausgebildet ist Die in Fig. 6 dargestellte Schrägfläche im vorderen Bereich 31 des Bohrerschaftes 22 weist einen negativen Achswinkel β auf und bildet den Kantenabzug 37. Die Verringerung des Kantenabzuges 37 gegenüber dem bisher sich über ein Viertel von dem vorderen Bereich 31 längs der Bohrerlängsachse 26 zu dem hinteren Bereich 27 erstreckenden Kantenabzug 37 weist den Vorteil auf, daß die Verjüngung des Spanraumes auf ein Minimum beschränkt ist und keinen Einfluß auf den Spanablauf ausübt. Es hat sich gezeigt, daß aufgrund der Verjüngung des Spanraumes durch den Kantenabzug in einem mittleren Bereich des Bohrerschaftes 12 der Span an die Bohrungswand drückt. Dies bedeutet, daß wiederum zusätzliche Kräfte auf den Bohrer wirken und diesen auslenken. Dadurch wird der Bohrvorgang bzw. der Schneidvorgang beunruhigt, so daß sowohl die Schnittkraft als auch die Passivkraft und somit die resultierende Kraft negativ beeinflußt war.

Es kann ebenso vorgesehen sein, daß der Kantenabzug 37 lediglich als schmal ausgebildete Fase oder vollständig entfallen kann, so daß dadurch eine weitere Schwingungsberuhigung während des Bohrprozesses erzielt werden kann.

Für die Kühlung des Bohrwerkzeuges 11 während des Bohrvorganges sind aufgrund der Ausbildung des großen Innen- und Außenspanraumes 13, 14 zwei Flüssigkeitsbohrungen vorgesehen, die sich axial durch das Bohrwerkzeug 11 erstrecken und in dem zwischen dem Innenspanraum 13 und Außenspanraum 14 gebildeten Vollquerschnitt des Bohrerschaftes 12 liegen. Dadurch kann die Kühlflüssigkeit über die Nebenfreifläche 38 abfließen und unmittelbar die dahinter liegende in Rotationsrichtung gesehene Wendeschneidplatten 21, 22 kühlen.

## Patentansprüche

1. Bohrwerkzeug für Bohrungen in Metallvollmaterial mit einem Bohrerschaft (12), der wenigstens eine sich axial erstreckende Ausnehmung (13, 14) aufweist und mit wenigstens zwei an einer Stirnseite des Bohrerschaftes (12) in verschiedenem Radialabstand zueinander angeordnete, geometrisch zumindest ähnliche Wendeschneidplatten (21, 22), deren Arbeitsbereiche sich überdecken und von denen jede zwei gleich lange Schneidkanten (41, 42; 43, 44) aufweist, die benachbart und in stumpfem Winkel zueinander geneigt sind und gleichzeitig im Eingriff stehen, wobei die radial innere Wendeschneidplatte (21) mit ihrer einen in Eingriff stehenden Schneidkante (41) die Bohrerlängsachse (26) geringfügig überschreitet und die radial äußere Wendeschneidplatte (22) mit ihrer einen in Eingriff stehenden Schneidkante (43) die Mantelfläche (36) des Bohrerschaftes (12) geringfügig überschreitet, und mindestens eine der Winkelhalbierenden (23, 24) der beiden Schneidkanten (41, 42; 43, 44) einer Wendeschneidplatte (21, 22) gegen die Bohrerlängsachse (26) um einen Winkel (α) gedreht ist, **dadurch gekennzeichnet, daß** der vordere Bereich (31) des Bohrerschaftes (12) gegenüber dem hinteren Bereich (27) des Bohrerschaftes (12) in Rotationsrichtung gesehen einen Linksdrall aufweist.

2. Bohrwerkzeug nach Anspruch 1, **dadurch gekennzeichnet, daß** der von dem vorderen Bereich (31) zu dem hinteren Bereich (27) des Bohrerschaftes (12) ausgebildete Linksdrall kontinuierlich verläuft.

3. Bohrwerkzeug nach Anspruch 1, **dadurch gekennzeichnet, daß** der von dem vorderen Bereich (31) zum hinteren Bereich (27) ausgebildete Linksdrall diskontinuierlich verläuft.

4. Bohrwerkzeug nach einem der vorhergehenden Ansprüche, **dadurch gekennzeichnet, daß** der Linksdrall einen Winkel (δ) im Bereich zwischen 0,1° und 25° aufweist.

5. Bohrwerkzeug nach einem der Ansprüche 1 bis 3, **dadurch gekennzeichnet, daß** der Linksdrall einen Winkel (δ) im Bereich zwischen 2° bis 6° aufweist.

6. Bohrwerkzeug nach Anspruch 1, **dadurch gekennzeichnet, daß** beide Winkelhalbierenden (23, 24) der beiden Schneidkanten (41, 42; 43, 44) der Wendeschneidplatten (21, 22) gemeinsam um einen Winkel (α) von 0° bis 10° gedreht sind.

7. Bohrwerkzeug nach Anspruch 1, **dadurch gekennzeichnet, daß** die Wendeschneidplatten (21, 22) in einen Winkel (Ω) radial zur Bohrerlängsachse (26) von 165° bis 185° angeordnet sind.

8. Bohrwerkzeug nach Anspruch 1 **dadurch gekennzeichnet, daß** in einem der Stirnseite (16) des Bohrerschaftes (12) gegenüberliegenden Bereich ein gegenüber einem Querschnitt des vorderen Bereichs (31) vergrößerter Querschnittsbereich (28) vorgesehen ist.

9. Bohrwerkzeug nach Anspruch 8, **dadurch gekennzeichnet, daß** an einer die Wendeschneidplatte (21, 22) aufnehmenden Begrenzungswand (17, 18) der Ausnehmung (13, 14) im hinteren Bereich ein die Querschnittsvergrößerung bildender Kemanstieg (28) vorgesehen ist.

10. Bohrwerkzeug nach Anspruch 8, **dadurch gekennzeichnet, daß** an einer der Wendeschneidplatte (21, 22) gegenüberliegenden Seitenfläche (32, 33) der Ausnehmung (13, 14) im hinteren Bereich ein die Querschnittsvergrößerung bildender Kernanstieg (28) vorgesehen ist.

11. Bohrwerkzeug nach Anspruch 8, **dadurch gekennzeichnet, daß** der Kemanstieg (28) an wenigstens einer Seitenfläche (32, 33) der Ausnehmung (13, 14) angeordnet ist.

12. Bohrwerkzeug nach Anspruch 8, **dadurch gekennzeichnet, daß** der Kernanstieg (28) an wenigstens einer Begrenzungsfläche (17, 18) angeordnet ist.

13. Bohrwerkzeug nach Anspruch 8, **dadurch gekennzeichnet, daß** der Kernanstieg (28) an wenigstens einer Begrenzungsfläche (17, 18) und an wenigstens einer Seitenfläche (32, 33) angeordnet ist

14. Bohrwerkzeug nach einem der Ansprüche 8 bis 13, **dadurch gekennzeichnet, daß** . der Kernanstieg (28) sich über weniger als die hintere Hälfte des Bohrerschaftes (12) erstreckt.

15. Bohrwerkzeug nach Anspruch 8, **dadurch gekennzeichnet, daß** der Kernanstieg (28) flach ansteigend ausgebildet ist.

16. Bohrwerkzeug nach Anspruch 8, **dadurch gekennzeichnet, daß** der Kernanstieg (28) stetig steigend ausgebildet ist.

17. Bohrwerkzeug nach Anspruch 8, **dadurch gekennzeichnet, daß** der Kernanstieg (28) diskontinuierlich ausgebildet ist

18. Bohrwerkzeug nach Anspruch 8, **dadurch gekennzeichnet, daß** der Kernanstieg (28) gegenüber dem Querschnitt des vorderen Bereiches (31) des Bohrerschaftes (12) kleiner als 20% ist.

19. Bohrwerkzeug nach Anspruch 8, **dadurch gekennzeichnet, daß** der Kernanstieg .(28) gegenüber dem Querschnitt des vorderen Bereiches (31) des Bohrerschaftes (12) kleiner als 10% ist

20. Bohrwerkzeug nach Anspruch 8, **dadurch gekennzeichnet, daß** der Kernanstieg (28) gegenüber dem Querschnitt des vorderen Bereiches (31) des Bohrerschaftes (12) kleiner als 5% ist

21. Bohrwerkzeug nach Anspruch 8, **dadurch gekennzeichnet, daß** ein Übergang zwischen dem vorderen, im Querschnitt konstant ausgebildeten Bereich (31) zum hinteren Bereich (27) des Bohrerschaftes (12) fließend ausgebildet ist.

22. Bohrwerkzeug nach Anspruch 1 **dadurch gekennzeichnet, daß** die axial sich erstreckende Ausnehmung (13, 14) an einer der Wendeschneidplatten (21, 22) gegenüberliegenden Seitenfläche (32, 33) eine an eine Mantelfläche (36) des Bohrerschaftes (12) angrenzende, sich axial zumindest teilweise über die gesamte Länge der Ausnehmung (13, 14) erstreckende Versteifungswulst (34) aufweist.

23. Bohrwerkzeug nach Anspruch 22, **dadurch gekennzeichnet, daß** sich die Versteifungswulst (34) über die gesamte Länge des Bohrerschaftes (12) erstreckt.

24. Bohrwerkzeug nach Anspruch 22, **dadurch gekennzeichnet, daß** die Versteifungswulst (34) im Verhältnis zur Breite der Seitenfläche (32, 33) schmal ausgebildet ist.

25. Bohrwerkzeug nach Anspruch 22, **dadurch gekennzeichnet, daß** die Versteifungswulst (34) das Trägheitsmoment und/oder Widerstandsmoment des Bohrerschaftes (12) erhöht.

26. Bohrwerkzeug nach Anspruch 22, **dadurch gekennzeichnet, daß** eine äußere Randzone der Versteifungswulst (34) einen Teil der Mantelfläche (36) des Bohrerschaftes (12) bildet und als Führungsfläche ausgebildet ist.

27. Bohrwerkzeug nach Anspruch 22, **dadurch gekennzeichnet, daß** die Versteifungswulst (34) gegenüber der Seitenfläche (32, 33) der Ausnehmung (13, 14) weniger als 3 Millimeter hervorsteht.

28. Bohrwerkzeug nach Anspruch 1 **dadurch gekennzeichnet, daß** im vorderen Bereich (31) des Bohrerschaftes (12) an wenigstens einer der Wendeschneidplatten (21, 22) gegenüberliegenden Seitenfläche (32, 33) eine in etwa schmal ausgebildete Schrägfläche (37) vorgesehen ist.

29. Bohrwerkzeug nach Anspruch 28, **dadurch gekennzeichnet, daß** die Schrägfläche (37) einen negativen Achswinkel (β) aufweist.

30. Bohrwerkzeug nach Anspruch 28, **dadurch gekennzeichnet, daß** der Übergang von der Schrägfläche (37) in die Seitenfläche (32, 33) des Spanraumes (13,14) wesentlich kleiner als die Länge der sich in Bohrerlängsachse (26) erstreckenden Länge der Wendeschneidplatten (21,22) ausgebildet ist.

31. Bohrwerkzeug nach Anspruch 28, **dadurch gekennzeichnet, daß** die Schrägfläche (37) eine schmal ausgebildete Fase ist.

32. Bohrwerkzeug nach Anspruch 1, **dadurch gekennzeichnet, daß** der Bohrerschaft (12) zwei im wesentlichen diametral einander gegenüberliegende Ausnehmungen (13, 14) aufweist, deren Begrenzungswand (17, 18) im wesentlichen rechtwinklig zu seinen Seitenflächen (32, 33) zumindest teilweise entlang des Bohrerschaftes (12) angeordnet ist.

33. Bohrwerkzeug nach Anspruch 32, **dadurch gekennzeichnet, daß** in den zwischen den Ausnehmungen (13, 14) liegenden in etwa vierteilkreisförmig ausgebildeten Vollquerschnitten des Bohrerschaftes (12) jeweils wenigstens eine Kühlflüssigkeitszufuhr (39) vorgesehen ist.

34. Bohrwerkzeug nach Anspruch 32, **dadurch gekennzeichnet, daß** die Begrenzungsflächen (17, 18) und Seitenflächen (32, 33) im wesentlichen plan ausgebildet sind.

## Claims

1. Boring tool for bores in solid metal material, having a borer shank (12) which has at least one axially extending recess (13, 14), and having at least two indexable inserts (21, 22) which are arranged at an end face of the borer shank (12) at a different radial distance relative to one another and are at least similar geometrically, and the working regions of which overlap, and of which each has two equally long cutting edges (41, 42; 43, 44) which are adjacent and inclined at an obtuse angle to one another and are in engagement simultaneously, the radially inner indexable insert (21), with its one engaged cutting edge (41), extending slightly beyond the borer longitudinal axis (26), and the radially outer indexable insert (22), with its engaged cutting edge (43), extending slightly beyond the lateral surface (36) of the borer shank (12), and at least one of the angle bisectors (23, 24) of the two cutting edges (41, 42; 43, 44) of an indexable insert (21, 22) being turned by an angle (α) relative to the borer longitudinal axis (26), **characterized in that**, as viewed in the direction of rotation, the front region (31) of the borer shank (12) has a left-hand twist relative to the rear region (27) of the borer shank (12).

2. Boring tool according to Claim 1, **characterized in that** the left-hand twist formed from the front region (31) to the rear region (27) of the borer shank (12) runs continuously.

3. Boring tool according to Claim 1, **characterized in that** the left-hand twist formed from the front region (31) to the rear region (27) runs discontinuously.

4. Boring tool according to one of the preceding claims, **characterized in that** the left-hand twist has an angle (δ) within a range of between 0.1° and 25°.

5. Boring tool according to one of Claims 1 to 3, **characterized in that** the left-hand twist has an angle (6) within a range of between 2° and 6°.

6. Boring tool according to Claim 1, **characterized in that** both angle bisectors (23, 24) of the two cutting edges (41, 42; 43, 44) of the indexable inserts (21, 22) are turned together by an angle (α) of 0° to 10°.

7. Boring tool according to Claim 1, **characterized in that** the indexable inserts (21, 22) are arranged at an angle (Ω) radially to the borer longitudinal axis (26) of 165° to 185°.

8. Boring tool according to Claim 1, **characterized in that** a cross-sectional region (28) enlarged relative to a cross section of the front region (31) is provided in a region opposite the end face (16) of the borer shank (12).

9. Boring tool according to Claim 8, **characterized in that** a core rise (28) forming the cross-sectional enlargement is provided in the rear region on a boundary wall (17, 18), accommodating the indexable insert (21, 22), of the recess (13, 14).

10. Boring tool according to Claim 8, **characterized in that** a core rise (28) forming the cross-sectional enlargement is provided in the rear region on a side surface (32, 33), opposite the indexable insert (21, 22), of the recess (13, 14).

11. Boring tool according to Claim 8, **characterized in that** the core rise (28) is arranged on at least one side surface (32, 33) of the recess (13, 14).

12. Boring tool according to Claim 8, **characterized in that** the core rise (28) is arranged on at least one boundary wall (17, 18).

13. Boring tool according to Claim 8, **characterized in that** the core rise (28) is arranged on at least one boundary surface (17, 18) and on at least one side surface (32, 33).

14. Boring tool according to one of Claims 8 to 13, **characterized in that** the core rise (28) extends over less than the rear half of the borer shank (12).

15. Boring tool according to Claim 8, **characterized in that** the core rise (28) is designed to rise at a small angle.

16. Boring tool according to Claim 8, **characterized in that** the core rise (28) is designed to rise continuously.

17. Boring tool according to Claim 8, **characterized in that** the core rise (28) is designed to be discontinuous.

18. Boring tool according to Claim 8, **characterized in that** the core rise (28) is less than 20% relative to the cross section of the front region (31) of the borer shank (12).

19. Boring tool according to Claim 8, **characterized in that** the core rise (28) is less than 10% relative to the cross section of the front region (31) of the borer shank (12).

20. Boring tool according to Claim 8, **characterized in that** the core rise (28) is less than 5% relative to the cross section of the front region (31) of the borer shank (12).

21. Boring tool according to Claim 8, **characterized in that** the transition between the front region (31) of constant cross section to the rear region (27) of the borer shank (12) is designed to be smooth.

22. Boring tool according to Claim 1, **characterized in that** the axially extending recess (13, 14), on a side surface (32, 33) opposite the indexable inserts (21, 22), has a reinforcing bead (34) which adjoins a lateral surface (36) of the borer shank (12) and extends axially at least partly over the entire length of the recess (13, 14).

23. Boring tool according to Claim 22, **characterized in that** the reinforcing bead (34) extends over the entire length of the borer shank (12).

24. Boring tool according to Claim 22, **characterized in that** the reinforcing bead (34) is designed to be narrow in relation to the width of the side surface (32, 33).

25. Boring tool according to Claim 22, **characterized in that** the reinforcing bead (34) increases the moment of inertia and/or the section modulus of the borer shank (12).

26. Boring tool according to Claim 22, **characterized in that** an outer marginal zone of the reinforcing bead (34) forms part of the lateral surface (36) of the borer shank (12) and is designed as a guide surface.

27. Boring tool according to Claim 22, **characterized in that** the reinforcing bead (34) is designed to project by less than 3 millimetres relative to the side surface (32, 33) of the recess (13, 14).

28. Boring tool according to Claim 1, **characterized in that**, in the front region (31) of the borer shank (12), a sloping surface (37) designed to be more or less narrow is formed on at least one side surface (32, 33) opposite the indexable inserts (21, 22).

29. Boring tool according to Claim 28, **characterized in that** the sloping surface (37) has a negative axial angle (β).

30. Boring tool according to Claim 28, **characterized in that** the transition from the sloping surface (37) into the side surface (32, 33) of the chip space (13, 14) is designed to be substantially smaller than the length of the indexable inserts (21, 22) which extends in the borer longitudinal axis (26).

31. Boring tool according to Claim 28, **characterized in that** the sloping surface (37) is a narrow bevel.

32. Boring tool according to Claim 1, **characterized in that** the borer shank (12) has two essentially diametrically opposite recesses (13, 14), the boundary wall (17, 18) of which is arranged essentially at right angles to its side surfaces (32, 33) at least partly along the borer shank (12).

33. Boring tool according to Claim 32, **characterized in that** in each case at least one cooling liquid feed (39) is provided in the solid cross sections of the borer shank (12) which lie between the recesses (13, 14) and are designed roughly in a quadrant shape.

34. Boring tool according to Claim 32, **characterized in that** the boundary surfaces (17, 18) and side surfaces (32, 33) are of essentially planar design.

## Revendications

1. Outil de perçage pour alésages dans un matériau en métal massif, comprenant une tige (12) qui présente au moins un logement (13, 14) s'étendant axialement et avec au moins deux plaquettes de coupe amovibles (21, 22) au moins géométriquement similaires, disposées à une distance radiale différente l'une de l'autre sur une face frontale de la tige (12), dont les zones de travail se recouvrent et dont chacune présente deux arêtes de coupe de même longueur (41, 42 ; 43, 44), qui sont voisines et inclinées l'une par rapport à l'autre suivant un angle obtus et qui sont simultanément en engagement, la plaquette de coupe amovible radialement interne (21) dépassant légèrement de l'axe longitudinal de l'outil de perçage (26) avec l'une de ses arêtes de coupe (41) en prise, et la plaquette de coupe amovible radialement extérieure (22) dépassant légèrement de la surface d'enveloppe (36) de la tige (12) avec l'une de ses arêtes de coupe (43) en prise, et au moins l'une des bissectrices (23, 24) des deux arêtes de coupe (41, 42 ; 43, 44) d'une plaquette de coupe amovible (21, 22) étant tournée vers l'axe longitudinal de l'outil de perçage (26) suivant un angle (α), **caractérisé en ce que** la zone avant (31) de la tige (12) présente une torsion à gauche, par rapport à la zone arrière (27) de la tige (12), vu dans le sens de rotation.

2. Outil de perçage selon la revendication 1, **caractérisé en ce que** la torsion à gauche réalisée depuis la zone avant (31) vers la zone arrière (27) de la tige (12) s'étend en continu.

3. Outil de perçage selon la revendication 1, **caractérisé en ce que** la torsion à gauche réalisée depuis la zone avant (31) vers la zone arrière (27) s'étend de manière discontinue.

4. Outil de perçage selon l'une quelconque des revendications précédentes, **caractérisé en ce que** la torsion à gauche présente un angle (δ) dans la plage comprise entre 0,1° et 25°.

5. Outil de perçage selon l'une quelconque des revendications 1 à 3, **caractérisé en ce que** la torsion à gauche présente un angle (δ) dans la plage comprise entre 2° et 6°.

6. Outil de perçage selon la revendication 1, **caractérisé en ce que** les deux bissectrices (23, 24) des deux arêtes de coupe (41, 42; 43, 44) des plaquettes de coupe amovibles (21, 22) sont tournées conjointement d'un angle (α) de 0° à 10°.

7. Outil de perçage selon la revendication 1, **caractérisé en ce que** les plaquettes de coupe amovibles (21, 22) sont disposées suivant un angle (Ω) radialement par rapport à l'axe longitudinal de l'outil de perçage (26), compris entre 165° et 185°.

8. Outil de perçage selon la revendication 1, **caractérisé en ce que** l'on prévoit, dans une zone opposée à la face frontale (16) de la tige (12), une zone de section transversale (28) agrandie par rapport à une section transversale de la zone avant (31).

9. Outil de perçage selon la revendication 8, **caractérisé en ce qu'**il est prévu, sur une paroi de limitation (17, 18) du logement (13, 14) recevant la plaquette de coupe amovible (21, 22), dans la zone arrière, une augmentation du noyau (28) formant un élargissement de la section transversale.

10. Outil de perçage selon la revendication 8, **caractérisé en ce qu'**il est prévu, sur une face latérale (32, 33) du logement (13, 14) opposée à la plaquette de coupe amovible (21, 22), dans la zone arrière, une augmentation du noyau (28) formant un élargissement de la section transversale.

11. Outil de perçage selon la revendication 8, **caractérisé en ce que** l'augmentation du noyau (28) est prévu sur au moins une face latérale (32, 33) du logement (13, 14).

12. Outil de perçage selon la revendication 8, **caractérisé en ce que** l'augmentation du noyau (28) est prévue sur au moins une face de limitation (17, 18).

13. Outil de perçage selon la revendication 8, **caractérisé en ce que** l'augmentation du noyau (28) est prévue sur au moins une face de limitation (17, 18) et sur au moins une face latérale (32, 33).

14. Outil de perçage selon l'une quelconque des revendications 8 à 13, **caractérisé en ce que** l'augmentation du noyau (28) s'étend sur moins de la moitié arrière de la tige (12).

15. Outil de perçage selon la revendication 8, **caractérisé en ce que** l'augmentation du noyau (28) est réalisée avec une augmentation douce.

16. Outil de perçage selon la revendication 8, **caractérisé en ce que** l'augmentation du noyau (28) est réalisée avec une augmentation continue.

17. Outil de perçage selon la revendication 8, **caractérisé en ce que** l'augmentation du noyau (28) est réalisée avec une augmentation discontinue.

18. Outil de perçage selon la revendication 8, **caractérisé en ce que** l'augmentation du noyau (28) est inférieure à 20% par rapport à la section transversale de la zone avant (31) de la tige (12).

19. Outil de perçage selon la revendication 8, **caractérisé en ce que** l'augmentation du noyau (28) est inférieure à 10% par rapport à la section transversale de la zone avant (31) de la tige (12).

20. Outil de perçage selon la revendication 8, **caractérisé en ce que** l'augmentation du noyau (28) est inférieure à 5% par rapport à la section transversale de la zone avant (31) de la tige (12).

21. Outil de perçage selon la revendication 8, **caractérisé en ce qu'**une transition entre la zone avant (31), réalisée avec une section transversale constante, et la zone arrière (27) de la tige (12) est réalisée de manière fluide.

22. Outil de perçage selon la revendication 1, **caractérisé en ce que** le logement (13, 14) s'étendant axialement présente sur une face latérale (32, 33) en regard de la plaquette de coupe amovible (21, 22), un bourrelet de renfort (34) adjacent à une surface d'enveloppe (36) de la tige (12), s'étendant axialement au moins partiellement sur toute la longueur du logement (13, 14).

23. Outil de perçage selon la revendication 22, **caractérisé en ce que** le bourrelet de renfort (34) s'étend sur toute la longueur de la tige (12).

24. Outil de perçage selon la revendication 22, **caractérisé en ce que** le bourrelet de renfort (34) est mince par rapport à la largeur de la face latérale (32, 33).

25. Outil de perçage selon la revendication 22, **caractérisé en ce que** le bourrelet de renfort (34) augmente le moment d'inertie et/ou le moment résistant de la tige (12).

26. Outil de perçage selon la revendication 22, **caractérisé en ce qu'**une zone périphérique extérieure du bourrelet de renfort (34) forme une partie de la surface d'enveloppe (36) de la tige (12) et est réalisée en tant que surface de guidage.

27. Outil de perçage selon la revendication 22, **caractérisé en ce que** le bourrelet de renfort (34) dépasse de moins de 3 millimètres par rapport à la face latérale (32, 33) du logement (13, 14).

28. Outil de perçage selon la revendication 1, **caractérisé en ce qu'**il est prévu une face oblique (37) relativement mince dans la zone avant (31) de la tige (12) sur au moins une face latérale (32, 33) en regard de la plaquette de coupe amovible (21, 22).

29. Outil de perçage selon la revendication 28, **caractérisé en ce que** la face oblique (37) présente un angle axial (β) négatif.

30. Outil de perçage selon la revendication 28, **caractérisé en ce que** la transition de la face oblique (37) à la face latérale (32, 33) du logement de copeaux (13, 14) est considérablement plus petite que la longueur des plaquettes de coupe amovibles (21, 22) s'étendant dans l'axe longitudinal de l'outil de perçage (26).

31. Outil de perçage selon la revendication 28, **caractérisé en ce que** la face oblique (37) est un chanfrein mince.

32. Outil de perçage selon la revendication 1, **caractérisé en ce que** la tige (12) présente deux logements (13, 14) essentiellement diamétralement opposés, dont la paroi de limitation (17, 18) est disposée essentiellement perpendiculairement à ses faces latérales (32, 33) au moins partiellement le long de la tige (12).

33. Outil de perçage selon la revendication 32, **caractérisé en ce qu'**il est prévu dans les sections transversales pleines de la tige (12) réalisées approximativement en forme de quart de cercle entre les logements (13, 14), à chaque fois au moins une alimentation en liquide de refroidissement (39).

34. Outil de perçage selon la revendication 32, **caractérisé en ce que** les faces de limitation (17, 18) et les faces latérales (32, 33) sont réalisées de manière essentiellement plane.
